# EUROPÄISCHE PATENTSCHRIFT

(11) **EP 1 219 646 B1**
(45) Veröffentlichungstag und Bekanntmachung des Hinweises auf die Patenterteilung: **16.11.2005**
(21) Anmeldenummer: 01127601.1
(22) Anmeldetag: 20.11.2001
(51) Int. Cl.: C08F 12/08, C08F 2/38, C08F 4/46, C08F 4/50, C08F 4/52

(54) **Verfahren zur anionischen Polymerisation von Styrol**
Process for anionic polymerization of styrene
Procédé de polymérisation anionique de styrène

(30) Priorität: 27.12.2000 DE 10065331
(43) Veröffentlichungstag der Anmeldung: 03.07.2002
(73) Patentinhaber: BASF Aktiengesellschaft, 67056 Ludwigshafen (DE)
(72) Erfinder: Schade, Christian, Dr., 67061 Ludwigshafen (DE); Desbois, Philippe, Dr., 67487 Maikammer (DE); Fischer, Wolfgang, Dr., 69190 Walldorf (DE); Gausepohl, Hermann, Dr., 67112 Mutterstadt (DE); Deffieux, Alain, Prof. Dr., 33000 Bordeaux (FR); Menoret, Stephane, 33402 Talence - Cedex (FR); Fontanille, Michel, Prof. Dr., 33400 Talence (FR)

(56) Entgegenhaltungen:
- DE-A- 19 806 774
- DE-A- 19 954 818
- US-A- 4 473 661
- WELCH F J: "Polymerization of Styrene by n-Butyllithium. II. Effect of Lewis Acids and Bases" JOURNAL OF THE AMERICAN CHEMICAL SOCIETY, AMERICAN CHEMICAL SOCIETY, WASHINGTON, DC, US, Nr. 82, 1960, Seiten 6000-6005, XP002104542 ISSN: 0002-7863

## Beschreibung

Die Erfindung betrifft ein Verfahren zur Homopolymerisation von Styrol, gegebenenfalls zusammen mit einem Polydienkautschuk, in Gegenwart von mindestens einem Lithiumorganyl, mindestens einem Metall-II-organyl und mindestens einem Aluminiumorganyl.

Die anionische Polymerisation verläuft in der Regel sehr schnell, so daß eine Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringeren Raum-Zeitausbeuten.

Es wurden daher verschiedene retardierende Zusätze zu den anionischen Polymerisationsinitiatoren vorgeschlagen, die die Polymerisationsgeschwindigkeit beeinflussen, beispielsweise Lewis-Säuren, wie Magnesium-, Zink- und Aluminiumalkyle.

Die als Initiatoren wirksamen Metallalkyle sind recht teure Substanzen. Triisobutylaluminium (TIBA) ist dabei noch die preisgünstigste. Bei niedrigen Temperaturen, z.B. im Bereich um 100°C ist TIBA allein nicht oder nur geringfügig polymerisationsaktiv. Auch in Kombination mit Lithiumalkylen wirkt es lediglich als Retarder, ist also nur eine zusätzliche, im Prinzip inerte Komponente in der Reaktionsmischung. Gelänge es, die Alkylgruppen von TIBA zur Coinitiierung der anionischen Polymerisation von Styrol zu veranlassen, entstünden deutliche Kostenvorteile. Diese Aufgabe liegt der vorliegenden Erfindung zugrunde. Eine weitere Aufgabe der Erfindung besteht darin, ein im technischen Maßstab rationell durchführbares Verfahren zur kontinuierlichen anionischen Polymerisation zu entwickeln, das mit möglichst geringen Mengen an Lösungsmitteln auskommt.

Diese Aufgaben werden durch das erfindungsgemäße Verfahren gelöst, bei dem eine Initiator-Kombination eingesetzt wird aus
A. einem Lithiumalkyl oder -alkoholat
B. einem Metall-(II)-alkyl oder -alkoholat
C. einem Aluminiumalkyl oder -alkoholat
und wobei die Polymerisation in Gegenwart von 5 bis 500 Mol-%, bezogen auf A+B+C, einer Lewis-Base bei Temperaturen oberhalb von 80°C durchgeführt wird.

Ein besonderes Problem dabei ist, die Kontrolle über die Reaktion nicht zu verlieren. Es ist bekannt, dass Lewis-Basen im allgemeinen die Geschwindigkeit der anionischen Polymerisation in unpolaren Medien beschleunigen und die Temperaturstabilität der aktiven Spezies erniedrigen. Damit verhindern Lewis-Basen also die durch die retardierenden Zusätze gewünschten Effekte. Aus diesem Grund ist die zugesetzte Menge an Lewis-Basen auf 500 Mol-%, bezogen auf A+B+C, begrenzt.

Aus der US-Patentschrift 3 716 495 sind Initiatorzusammensetzungen für die Polymerisation von konjugierten Dienen und Vinylaromaten bekannt, bei denen eine effektivere Nutzung des Lithiumalkyls als Initiator durch den Zusatz eines Metallalkyls eines Metalls der Gruppe 2a, 2b oder 3a des Periodensystems, wie beispielsweise Diethylzink oder auch TIBA, und polare Verbindungen, wie Ether oder Amine erreicht wird. Aufgrund der notwendigen hohen Lösungsmittelmengen, relativ niedrigen Temperaturen und langen Reaktionszeiten im Bereich von einigen Stunden sind die Raum-Zeit-Ausbeuten entsprechend niedrig.

Die DE-A 198 06 774 beschreibt ein Verfahren zur Homopolymerisation von vinylaromatischen Monomeren oder Copolymerisation von vinylaromatischen Monomeren und Dienen in Gegenwart von mindestens einem Alkalimetallorganyl, mindestens einem Magnesiumorganyl und mindestens einem Aluminiumorganyl sowie eine Initiatorzusammensetzung zur Durchführung des Verfahrens. Als Beispiel für Aluminiumorganyl ist u.a. TIBA genannt. Diese Initiatorkombination soll die Einstellung der Polymerisationsgeschwindigkeit in weiten Temperatur- und Konzentrationsbereichen ermöglichen, insbesondere soll es möglich werden, die Polymerisationstemperatur zu erhöhen. Die Polymerisation nach DE-A 198 06 774 wird aber in Abwesenheit von Lewis-Basen durchgeführt; unter diesen Bedingungen wirkt TIBA nur in geringem Maß als Coinitiator.

Das erfindungsgemäße Verfahren wird vorzugsweise zur Homopolymerisation von Styrol angewandt, es kann jedoch in Mengen von bis zu 25 Gew.-% durch übliche Comonomere ersetzt sein. Geeignete Comonomere sind α-Methylstyrol, p-Methylstyrol, Ethylstyrol, tert.-Butylstyrol, Vinyltoluol, 1,1-Diphenylethylen oder 1,2-Diphenylethylen, Butadien, Isopren, 2,3-Dimethylbutadien, 1,3-Pentadien,1,3-Hexadiene oder Piperylen oder deren Mischungen. Die Polymerisation kann auch in Gegenwart von 3 bis 40, vorzugsweise von 5 bis 30 Gew.-%, bezogen auf die Monomeren, eines Polydienkautschuks, z.B. von Polybutadien oder einem Butadien/Styrol-Blockcopolymeren, durchgeführt werden. Bevorzugte Kautschuke sind Butadien/Styrol-Zweiblockcopolymere und Styrol/Butadien/Styrol-Dreiblockcopolymere, jeweils mit getrennten oder verschmierten Blöcken, sowie Mischungen dieser Blockcopolymeren mit Polybutadien im Gewichtsverhältnis 85:15 bis 50:50.

Geeignete Lithiumorganyle A sind Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-Dilithio-2-buten oder 1,4-Dilithiobenzol, sowie Lithiumisopropoxylat, Lithiumethylhexanoat und Lithium-tert.-amylat. Bevorzugt sind n- und sec-Butyllithium.

Geeignete Metall-(II)-organyle B sind Dialkyle, Dialkoholate und Alkylalkoholate des Magnesiums, Calciums, Strontiums, Bariums und Zinks, wobei Magnesium und Zink bevorzugt sind. Besonders bevorzugt sind (n-Butyl)(s-Butyl)-magnesium, sowie Di-n-alkymagnesium-Verbindungen, bei denen die Alkylreste 2 bis 8 C-Atome aufweisen, insbesondere Di-n-butylmagnesium, (n-Butyl)(n-Octyl)magnesium und (n-Butyl(ethyl)magnesium.

Geeignete Aluminiumorganyle sind solche der Formel Al R¹₂R² mit R¹ = C₁-C₄-Alkyl und R² = H, R¹ oder -O-C₂H₅,
Bevorzugt ist TIBA.

Als Lewis-Basen sind grundsätzlich alle literaturbekannten Additive der anionischen Polymerisation geeignet. Sie enthalten im allgemeinen mindestens ein O-, N-, S- oder P-Atom, das über ein freies Elektronenpaar verfügt. Bevorzugt sind Ether und Amine, z.B. Tetrahydrofuran, Diethylether, Tetrahydropyran, Dioxan, Kronenether, Alkylenglykoldialkylether, z.B. Ethylenglykolmonoethylether, Ethylenglykoldimethylether, N,N,N',N'-Tetramethylethylendiamin, N,N,N',N",N"-Pentamethylentriamin, 1,2-Bis(piperidino)ethan, Pyridin, N,N,N',N',N",N"-Hexamethyltriethylentriamin und Phosphorsäurehexamethyltriamid. Der Zusatz von Lewis-Basen führt häufig zu einer Steigerung der Reaktionsgeschwindigkeit. Ihre Menge ist daher zweckmäßigerweise so zu bemessen, daß die Reaktionsgeschwindigkeit des gesamten Ansatzes kleiner ist als in einem Ansatz, der ohne Zusatz der retardierenden Komponenten durchgeführt wird. Dazu verwendet man weniger als 500 Mol-%, bevorzugt weniger als 200 Mol-% und insbesondere weniger als 100 Mol-% der Lewis-Base, bezogen auf A+B+C.

Die Polymerisation kann in Gegenwart eines Lösungsmittels vorgenommen werden. Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Dekalin, Benzol, Alkylbenzole wie Toluol, Xylol, Ethylbenzol oder Cumol oder geeignete Gemische. Das Lösungsmittel sollte natürlich die verfahrenstypisch erforderliche hohe Reinheit aufweisen. Mit der erfindungsgemäßen Initiatorkombination wird es möglich, mit verhältnismäßig geringen Mengen an Lösungsmitteln zu arbeiten. Bevorzugt sind 0 bis 500 Gew.-%, insbesondere 0 bis 100 Gew.-% und ganz besonders bevorzugt weniger als 75 Gew.-% Lösungsmittel, bezogen auf die Monomeren. Die Polymerisation kann auch in Gegenwart von bis zu 10 Gew.-% Mineralöl, bezogen auf Monomeren, durchgeführt werden. Bevorzugt sind Paraffine oder Weißöle mit Siedepunkten oberhalb von 300°C. Diese setzen bekanntlich auch die Fließfähigkeit von Polystyrol herab.

Die erfindungsgemäßen Komponenten werden bevorzugt in einem solchen Verhältnis eingesetzt, dass die Lebensdauer einer polymerisationsfähigen Polystyrollösung gegenüber derjenigen einer Polystyryllithiumlösung unter gleichen Temperatur- und Konzentrationsbedingungen erhöht ist. Dazu bestimmt man die Zeit, bis zu der der polymerisationsfähige Anteil einer Polystyrol-Lösung in Cyclohexan bei 100°C auf die Hälfte abgesunken ist. Diese Halbwertzeit beträgt für eine Polystyryllithiumlösung (ca. 3 mmol/l) beispielsweise ca. 3 Stunden. Eine mit einer erfindungsgemäßen Initiatormischung gestartete Polystyrollösung, die über die gleiche Anzahl wachsender Ketten verfügt, würde unter diesen Bedingungen eine größere Halbwertzeit aufweisen. Bevorzugt beträgt diese Halbwertzeit mehr als 20, ganz besonders bevorzugt mehr als 50 Stunden.

Die Kombination der Metallalkyl-Initiatoren A+B+C wird bevorzugt in Mengen von 0,0001 bis 5 Mol-%, insbesondere von 0,01 bis 1 Mol-%, bezogen auf die Monomeren, eingesetzt. Dabei sollte das Molverhältnis Li : Me(II) zwischen 1 : 0,1 und 1 : 3,8 und das Molverhältnis Li : Al zwischen 1 : 0,2 und 1 : 4 liegen. Das Molverhältnis Lewis-Base zu Lithium sollte vorzugsweise mindestens 0,05 : 1 betragen und insbesondere zwischen 0,1 : 1 und 10 : 1 liegen.

Die Lithium-, Magnesium- und Aluminiumalkyle können zusammen oder einzeln, zeitlich oder räumlich versetzt der Monomermischung zugegeben werden. Bevorzugt werden sie als vorgemischte Initiatorzusammensetzung verwendet.

Zur Herstellung der Initiatorzusammensetzung können die Komponenten in einem inerten Kohlenwasserstoff, beispielsweise n-Hexan, n-Heptan, Cyclohexan, Ethylbenzol, Toluol oder Weißöl als Lösungsmittel gelöst und zusammengegeben werden. Vorzugsweise vermischt man die in den Kohlenwasserstoffen gelösten Metallalkyle miteinander und läßt die Mischung mindestens 5 Minuten bei einer Temperatur im Bereich von 0 bis 120°C reifen. Gegebenenfalls kann hierzu ein Lösungsvermittler, beispielsweise Diphenylethylen zugegeben werden, um das Ausfallen einer der Komponenten aus dieser Initiatorlösung zu verhindern.

Nach Beendigung der Polymerisation können die lebenden Polymerketten mit einem Kettenabbruchmittel verschlossen werden. Als Kettenabbruchmittel eignen sich insbesondere protonenaktive Substanzen, wie beispielsweise Wasser, Alkohole, aliphatische und aromatische Carbonsäuren sowie anorganische Säuren wie Kohlensäure oder Borsäure.

Die Zielprodukte können Homopolymerisate oder Copolymerisate des Styrols sowie deren Mischungen sein. Bevorzugt wird Polystyrol erhalten. Es ist auch möglich, mit dem erfindungsgemäßen Verfahren schlagzähes Polystyrol (HIPS) herzustellen, wobei als Kautschuke Polybutadien, Styrol-Butadien-Blockcopolymerisate oder Mischungen davon eingesetzt werden können. Die Molekulargewichte Mₙ können in weiten Grenzen zwischen 1000 bis 1000000 g/mol liegen. Bevorzugt sind Mₙ zwischen 20000 und 200000.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Es können auch verschiedene Kombinationen solcher Reaktoren verwendet werden. Das erfindungsgemäße Verfahren führt je nach Wahl der Initiatorkonzentration und -Zusammensetzung, des speziell angewandten Verfahrensablaufs und anderer Parameter, wie Temperatur und evtl. Temperaturverlauf zu Polymerisaten mit hohem oder niedrigem Molgewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Vorzugsweise wird das Verfahren kontinuierlich durchgeführt. Bevorzugt wird mindestens ein Teil des Umsatzes, insbesondere Umsätze zwischen 50 und 100 % in einem nicht rückvermischenden Reaktor oder Reaktorabschnitt durchgeführt.

Die Polymerisation wird bei Temperaturen von mindestens 80°C ausgeführt. Die Reaktionszone oder Teile der Reaktionszone können auch höhere Temperaturen aufweisen, beispielsweise von mehr als 100°C. Bevorzugt wird mindestens ein Teil der Polymerisation bei 120°C durchgeführt, ohne daß es dabei zu einer Durchgehreaktion kommt.

Ein weiterer Gegenstand der Erfindung ist demgemäß ein kontinuierliches Verfahren zur anionischen Polymerisation von Styrol, gegebenenfalls in Gegenwart von 5 bis 30 Gew.-%, bezogen auf Styrol, eines Polydienkautschuks mittels 0,01 bis 1 Mol-%, bezogen auf Styrol, einer Kombination der Metallorganyl-Initiatoren
A. n- oder sec-Butyllithium,
B. einem C₂-C₈-n-Dialkylmagnesium oder (n-Butyl)(sec-Butyl)-magnesium,
C. Triisobutylaluminium,
wobei die Polymerisation in Gegenwart von 10 bis 200 Mol-%, bezogen auf A+B+C, einer Lewis-Base, ausgewählt aus Tetrahydrofuran, Ethylenglykoldimethylether und N,N,N',N'-Tetramethylethylendiamin, sowie von 0 bis 100 Gew.-%, bezogen auf Styrol, eines Lösungsmittels, ausgewählt aus Toluol, Cyclohexan, Heptan, Ethylbenzol und/oder 0 bis 10 Gew.-% eines Weißöls, durchgeführt wird.

Die in den Beispielen genannten Teile und Prozente beziehen sich auf das Gewicht. Eingesetzt wurden folgende Substanzen:

| | |
|---|---|
| s-Butyllithium | 1,6 M in Cyclohexan, Fa. Chemetall |
| Triisobutylaluminium | (TIBA) 14%ig in Toluol, Fa. Witco |
| (n-Butyl)₂magnesium | (MAGALA) 10%ig in Heptan, Fa. Akzo Nobel als 7,5:1 molarer Komplex in Triethylaluminium |
| (n-Butyl)(methyl)magnesium | (BOMAG-A) 20%ig in Heptan, Fa. Witco |

### Beispiel 1A

a) Herstellung der Initiatorzusammensetzung
   Die entsprechenden Mengen sec-Butyllithium, Di-n-butylmagnesium, TIBA und N,N,N',N'-Tetramethylethylendiamin (TMEDA) wurden bei 25°C zusammengegeben und vor der Verwendung 30 min lang gerührt. Das molare Verhältnis Li : Mg : Al : TMEDA betrug 1 : 0,5 : 0,9 : 1,9.
b) Polymerisation
   In einem 50 ml Kolben wurden zu einer Mischung aus Styrol und Cyclohexan im Gewichtsverhältnis 20 : 80 soviel der oben beschriebenen Initiatormischung zugesetzt, daß das molare Verhältnis Styrol zu Li 1 : 0,002 betrug. Die Mischung wurde 7 h bei 80°C gerührt. Danach wurde die Polymerisation durch Zusatz von 0,1 ml Propanol abgebrochen.

### Vergleichsbeispiel 1B

Die Ansätze 1a) und 1b) wurden wiederholt, dabei aber bei der Herstellung der Initiatorzusammensetzung die Magnesiumverbindung und das TMEDA weggelassen.
c) Ergebnisse

| | Mn (g/mol) | Feststoffgehalt (%) |
|---|---|---|
| Beispiel 1A | 14.950 | 97 |
| Beispiel 1B | 89.970 | 100 |

Die Auswertung zeigt, daß in Gegenwart von Di-n-butylmagnesium eine größere Anzahl an Polystyrolketten initiiert wird als in dessen Abwesenheit. Die Zahl der gebildeten Ketten ist größer als die Zahl der durch das Dibutylmagnesium eingebrachten Alkylgruppen. Das bedeutet, daß Polystyrolketten auch durch Alkylgruppen der Alkylaluminiumverbindung TIBA initiiert worden sind.

### Beispiel 2A

a) Initiatorzusammensetzung wie bei 1A, jedoch mit Tetrahydrofuran (THF) statt TMEDA.
   Li : Mg : Al : THF = 1 : 1 : 0,8 : 1,8
b) Polymerisation wie bei 1A.

### Vergleichsbeispiel 2B

Die Ansätze 2a) und 2b) wurden wiederholt, aber ohne Zusatz der Magnesiumverbindung.
c) Ergebnisse

| | Mn (g/mol) | Umsatz (%) |
|---|---|---|
| Beispiel 2A | 26.740 | 98 |
| Beispiel 2B | 88.050 | 100 |

### Beispiel 3A

a) Initiatorzusammensetzung wie bei 1A
b) Polymerisation wie bei 1A, jedoch mit Lösungsmittelgemisch Styrol : Toluol = 20 : 80.

### Vergleichsbeispiel 3B

Die Ansätze 3a) und 3b) wurden wiederholt, aber ohne Zusatz des TMEDA.
c) Ergebnisse

| | Mn (g/mol) | Umsatz (%) |
|---|---|---|
| Beispiel 3A | 26.800 | 100 |
| Beispiel 3B | 53.000 | 100 |

### Beispiel 4

Für die kontinuierliche Polymerisation wurde ein doppelwandiger, 3-1-Rührkessel mit einem Standard-Ankerrührer verwendet. Der Reaktor war für einen Druck von 60 bar ausgelegt und mit einem Wärmeträgermedium für eine isotherme Polymerisationsführung temperiert.

In den Rührkessel wurden unter Rühren (100 Umdrehungen pro Minute) kontinuierlich 740 g/h Styrol, 240 g/h Toluol und 30 g/h einer mit Toluol verdünnten Initiatormischung aus Triisobutylaluminium, (n-Butyl)(n-octyl)magnesium, sec.-Butyllithium und THF dosiert und bei einer konstanten Massetemperatur von 86°C gerührt. Das molare Verhältnis der Komponenten in der Initiatorlösung betrug Li : Mg : Al : THF = 1 : 0,5 : 0,9 : 2. Die Dosierung der Initiatorlösung wurde so eingestellt, daß dem Reaktor 3,07 mmol/h an Li-Verbindung zugeführt wurden.

Der austrag des Rührkessels wurde in zwei nacheinander geschaltete, jeweils gerührte und 4 Liter fassende Turmreaktoren weitergefördert. Der erste Turmreaktor wurde bei einer Innentemperatur von 101°C betrieben. Im zweiten Turmreaktor wurde über zwei gleich lange, nacheinander angeordnete Heizzonen die Temperatur so eingestellt, daß die Innentemperatur am Ende der ersten Zone 124°C, am Ende der zweiten Zone 158°C betrug. Am Austritt des Turmreaktors wurde die Polymerisationsmischung über einen Mischer mit 5 g/h Methanol versetzt, anschließend durch ein auf 260°C beheiztes Rohrstück geführt und über ein Druckregelventil in einen auf 25 mbar gehaltenen Vakuumtopf entspannt. Die Schmelze wurde mit einer Schnecke ausgetragen und granuliert.

Nach wenigen Stunden stellte sich ein stabiler Gleichgewichtszustand in allen Anlagenteilen ein. Der Feststoffgehalt am Ausgang des Rührkessels betrug 26 Gew.-%, am Ausgang des ersten Turmreaktors 58 Gew.-%. Am Ausgang des zweiten Turmreaktors wurde ein quantitativer Umsatz festgestellt (Feststoffgehalt ca. 73 Gew.-%). Die Polystyrol-Matrix besaß ein Molekulargewicht von M_{w} = 164.500 g/mol und eine Uneinheitlichkeit M_{w}/Mₙ von 2,95. Die Verteilung war monomodal. Es wurde ein Gehalt von unter 5 ppm Styrol, unter 5 ppm Ethylbenzol und 53 ppm Toluol bestimmt.

### Beispiel 5

In den Rührkessel aus Beispiel 4 wurden unter Rühren (100 Umdrehungen pro Minute) kontinuierlich 513 g/h Styrol, 487 g/h einer Kautschuklösung, hergestellt nach O.Z. 0050/49155, Beispiel 2, und 20 g einer Initiatorlösung dosiert und bei einer konstanten Massetemperatur von 92°C gerührt. Die Initiatorlösung bestand aus einer Mischung aus sec-Butyllithium, Triisobutylaluminium, (n-Butyl)(n-octyl)magnesium und THF im molaren Verhältnis Li : Mg : Al : THF = 1 : 0,5 : 0,85 : 2. Die Dosierung der Initiatorlösung wurde so eingestellt, daß dem Reaktor 3,07 mmol/h an Li-Verbindung zugeführt wurden.

Der Austrag des Rührkessels wurde in einen Doppelmantel-Rohrreaktor mit einem Innendurchmesser von 29,7 mm und einer Länge von 2100 mm weitergefördert. Der Rohrreaktor war für eine Druck von bis zu 100 bar und für eine Temperatur von bis zu 350°C ausgelegt. Der Rohrreaktor wurde über ein im Gleichstrom geführtes Wärmeträgermedium temperiert und die Temperatur der Polymerisationsmischung über drei gleichmäßig über die Reaktionsstrecke verteilte Thermofühler bestimmt. Die Temperatur des Wärmeträgermediums betrug am Rohrreaktoreintritt 104°C. Die höchste Temperatur der Polymerisationslösung wurde am Ende des Rohrreaktors mit 182°C erreicht.

Nach Verlassen des Rohrreaktors wurden der Polymerisationsmischung 25 g/h einer Mischung aus Methanol, Toluol und Mineralöl im Verhältnis 8 : 32 : 60 Gew.-% mittels einer HPLC-Pumpe zudosiert und in einem nachgeschalteten Rohrstück mit einem statischen Mischer homogenisiert. Die Polymerschmelze wurde über ein Drosselventil in einen auf 20 mbar gehaltenen Entgasungstopf entspannt, mit einer Schneckenpumpe abgezogen, verstrangt und granuliert.

Nach kurzer Zeit stellte sich ein stabiler Gleichgewichtszustand in allen Anlagenteilen ein. Der Feststoffgehalt am Ausgang des Rührkessels betrug 47 Gew.-%. Am Ausgang des Rohrreaktors wurde ein quantitativer Monomerumsatz festgestellt. Die Polystyrol-Matrix besaß ein Molekulargewicht von M_{w} = 166000 g/mol und eine Uneinheitlichkeit M_{w}/Mₙ von 2,64. Es wurde ein Gehalt von unter 5 ppm Styrol, unter 5 ppm Ethylbenzol und 67 ppm Toluol bestimmt. Das Material besaß eine Streckspannung von 28 n/mm², eine Reißdehnung von 27 % und eine Lochkerbschlagzähigkeit von 14 kJ/m².

## Patentansprüche

1. Verfahren zur anionischen Polymerisation von Styrol, gegebenenfalls zusammen mit untergeordneten Mengen an Comonomeren, mittels einer Kombination der Metallorganyl-Initiatoren
A. Lithiumalkyl oder -alkoholat
B. Metall-(II)-alkyl oder -alkoholat
C. Aluminiumalkyl oder -alkoholat der Formel Al R¹₂R² mit R¹ = C₁-C₄-Alkyl und R² = H, R¹ oder -O-C₂H₅,
**dadurch gekennzeichnet, daß** die Polymerisation in Gegenwart von 5 bis 500 Mol-%, bezogen auf A+B+C einer Lewis-Base bei Temperaturen oberhalb von 80°C durchgeführt wird.

2. Verfahren nach Anspruch 1, **dadurch gekennzeichnet, daß** als Komponente A n- oder sec-Butyllithium eingesetzt wird.

3. Verfahren nach Anspruch 1, **dadurch gekennzeichnet, daß** als Komponente B ein Magnesium- oder Zinkdialkyl eingesetzt wird.

4. Verfahren nach Anspruch 1, **dadurch gekennzeichnet, daß** als Komponente B ein C₂- bis C₈-Di-n-alkylmagnesium, vorzugsweise Di-n-butylmagnesium, eingesetzt wird.

5. Verfahren nach Anspruch 1, **dadurch gekennzeichnet, daß** als Komponente C Triisobutylaluminium (TIBA) eingesetzt wird.

6. Verfahren nach Anspruch 1, **dadurch gekennzeichnet, daß** als Lewis-Base ein Ether, vorzugsweise Tetrahydrofuran, eingesetzt wird.

7. Verfahren nach Anspruch 1, **dadurch gekennzeichnet, daß** die Polymerisation in Gegenwart von 0 bis 500 Gew.-%, bezogen auf die Monomeren, eines Kohlenwasserstoff-Lösungsmittels, vorzugsweise Toluol, Cyclohexan, Heptan, Ethylbenzol und/oder von 0 bis 10 Gew.-% eines Weißöls durchgeführt wird.

8. Verfahren nach Anspruch 1, **dadurch gekennzeichnet, daß** die Polymerisation in Gegenwart von 3 bis 40 Gew.-%, bezogen auf die Monomeren, eines Polydienkautschuks durchgeführt wird.

9. Verfahren nach Anspruch 1, **dadurch gekennzeichnet, daß** die Kombination der Metallorganyl-Initiatoren A+B+C in Mengen von 0,0001 bis 5 Mol-%, bezogen auf die Monomeren, eingesetzt wird.

10. Verfahren nach Anspruch 1, **dadurch gekennzeichnet, daß** das Molverhältnis Li : Me(II) zwischen 1 : 0,1 und 1 : 3,8 und das Molverhältnis Li : Al zwischen 1 : 0,2 und 1 : 4 liegt.

11. Verfahren nach Anspruch 1, **dadurch gekennzeichnet, daß** das Molverhältnis Lewis-Base : Li mindestens 0,05 : 1 beträgt und vorzugsweise zwischen 0,1 : 1 und 10 : 1 liegt.

12. Kontinuierliches Verfahren zur anionischen Polymerisation von Styrol, gegebenenfalls in Gegenwart von 5 bis 30 Gew.-%, bezogen auf Styrol, eines Polydienkautschuks, mittels 0,01 bis 1 Mol-%, bezogen auf Styrol, einer Kombination der Metallorganyl-Initiatoren
A. n- oder sec-Butyllithium,
B. einem C₂-C₈-n-Dialkylmagnesium oder (n-Butyl)(sec-Butyl)-magnesium,
C. Triisobutylaluminium,
**dadurch gekennzeichnet, daß** die Polymerisation in Gegenwart von 10 bis 200 Mol, bezogen auf die Metallorganyle A+B+C, einer Lewis-Base, ausgewählt aus Tetrahydrofuran, Ethylenglykoldimethylether und N,N,N',N'-Tetramethylethylendiamin, sowie von 0 bis 100 Gew.-%, bezogen auf Styrol, eines Lösungsmittels, ausgewählt aus Toluol, Cyclohexan, Heptan, Ethylbenzol und/oder von 0 bis 10 Gew.-% eines Weißöls, bei Temperaturen oberhalb von 80°C, durchgeführt wird.

## Claims

1. A process for the anionic polymerization of styrene, if appropriate together with minor amounts of comonomers, by means of a combination of the metal organyl initiators
A. alkyllithium or lithium alcoholate
B. metal(II) alkyl or metal alcoholate
C. alkylaluminum or aluminum alcoholate of the formula AlR₂¹R² where R¹ = C₁-C₄-alkyl and R² = H, R¹ or -O-C₂H₅,
wherein the polymerization is carried out in the presence of from 5 to 500 mol%, based on A+B+C, of a Lewis base at temperatures above 80°C.

2. The process according to claim 1, wherein n- or sec-butyllithium is used as component A.

3. The process according to claim 1, wherein dialkylmagnesium or dialkylzinc is used as component B.

4. The process according to claim 1, wherein a C₂- to C₈-di-n-alkylmagnesium, preferably di-n-butylmagnesium, is used as component B.

5. The process according to claim 1, wherein triisobutylaluminum (TIBA) is used as component C.

6. The process according to claim 1, wherein an ether, preferably tetrahydrofuran, is used as the Lewis base.

7. The process according to claim 1, wherein the polymerization is carried out in the presence of from 0 to 500% by weight, based on the monomers, of a hydrocarbon solvent, preferably toluene, cyclohexane, heptane, or ethylbenzene, and/or from 0 to 10% by weight of a white oil.

8. The process according to claim 1, wherein the polymerization is carried out in the presence of from 3 to 40% by weight, based on the monomers, of a polydiene rubber.

9. The process according to claim 1, wherein the combination of the metal organyl initiators A+B+C is used in amounts of from 0.0001 to 5 mol%, based on the monomers.

10. The process according to claim 1, wherein the molar ratio Li:Me(II) is from 1:0.1 to 1:3.8 and the molar ratio Li:Al is from 1:0.2 to 1:4.

11. The process according to claim 1, wherein the molar ratio Lewis base:Li is at least 0.05:1 and is preferably from 0.1:1 to 10:1.

12. A continuous process for the anionic polymerization of styrene, if appropriate in the presence of from 5 to 30% by weight, based on styrene, of a polydiene rubber, by means of from 0.01 to 1 mol%, based on styrene, of a combination of the metal organyl initiators
A. n- or sec-butyllithium,
B. a C₂-C₈-n-dialkylmagnesium or (n-butyl)(sec-butyl)magnesium,
C. triisobutylaluminum,
wherein the polymerization is carried out in the presence of from 10 to 200 mol%, based on the metal organyls A+B+C, of a Lewis base selected from tetrahydrofuran, ethylene glycol dimethyl ether and N,N,N',N'-tetramethylethylenediamine, and from 0 to 100% by weight, based on styrene, of a solvent selected from toluene, cyclohexane, heptane and ethylbenzene and/or from 0 to 10% by weight of a white oil, at temperatures above 80°C.

## Revendications

1. Procédé de polymérisation anionique de styrène, éventuellement conjointement à des quantités minimes de comonomères, au moyen d'une combinaison des amorceurs à base d'organyles métalliques :
A. du lithium-alkyle ou de l'alcoolate de lithium,
B. du métal (II)-alkyle ou de l'alcoolate de ce métal,
C. de l'aluminium-alkyle ou de l'alcoolate d'aluminium de la forme Al R₂¹R², où R¹ = alkyle en C₁-C₄ et R² = H, R¹ ou -O-C₂H₅,
**caractérisé en ce que** la polymérisation est effectuée en présence de 5 à 500 % molaires, par rapport à A+B+C, d'une base de Lewis à des températures supérieures à 80°C.

2. Procédé suivant la revendication 1, **caractérisé en ce que**, comme composant A, on met en oeuvre du n-butyl-lithium ou du sec-butyl-lithium.

3. Procédé suivant la revendication 1, **caractérisé en ce que**, comme composant B, on met en oeuvre du magnésium-dialkyle ou du zinc-dialkyle.

4. Procédé suivant la revendication 1, **caractérisé en ce que**, comme composant B, on met en oeuvre un di-n-alkyl-magnésium en C₂-C₈, de préférence du di-n-butyl-magnésium.

5. Procédé suivant la revendication 1, **caractérisé en ce que**, comme composant C, on met en oeuvre du triisobutyl-aluminium (TIBA).

6. Procédé suivant la revendication 1, **caractérisé en ce que**, comme base de Lewis, on met en oeuvre un éther, de préférence du tétrahydrofuranne.

7. Procédé suivant la revendication 1, **caractérisé en ce que** la polymérisation est effectuée en présence de 0 à 500 % en poids, par rapport aux monomères, d'un solvant à base d'hydrocarbure, de préférence du toluène, du cyclohexane, de l'heptane, de l'éthylbenzène et/ou de 0 à 10 % en poids d'une huile blanche.

8. Procédé suivant la revendication 1, **caractérisé en ce que** la polymérisation est effectuée en présence de 3 à 40 % en poids, par rapport aux monomères, d'un caoutchouc polydiénique.

9. Procédé suivant la revendication 1, **caractérisé en ce que** la combinaison des amorceurs à base d'organyles métalliques A+B+C est mise en oeuvre en des quantités de 0,0001 à 5 % molaires, par rapport aux monomères.

10. Procédé suivant la revendication 1, **caractérisé en ce que** le rapport molaire Li/Me(II) est compris entre 1/0,1 et 1/3,8 et **en ce que** le rapport molaire Li/Al est compris entre 1/0,2 et 1/4.

11. Procédé suivant la revendication 1, **caractérisé en ce que** le rapport molaire base de Lewis/Li est au moins de 0,05/1 et de préférence compris entre 0,1/1 et 10/1.

12. Procédé continu de polymérisation anionique de styrène, éventuellement en présence de 5 à 30 % en poids par rapport au styrène d'un caoutchouc polydiénique, au moyen de 0,01 à 1 % molaire, par rapport au styrène, d'une combinaison des amorceurs à base d'organyles métalliques :
A. du n-butyl-lithium ou du sec-butyl-lithium,
B. un n-dialkyl-magnésium en C₂-C₈ ou du (n-butyl)(sec-butyl)-magnésium,
C. du triisobutyl-aluminium,
**caractérisé en ce que** la polymérisation est effectuée en présence de 10 à 200 moles, par rapport aux organyles métalliques A+B+C, d'une base de Lewis choisie parmi du tétrahydrofuranne, de l'éther diméthylique d'éthylène glycol et de la N,N,N',N'-tétraméthyléthylènediamine, ainsi que de 0 à 100 % en poids, par rapport au styrène, d'un solvant choisi parmi du toluène, du cyclohexane, de l'heptane, de l'éthylbenzène et/ou de 0 à 10 % en poids d'une huile blanche, à des températures supérieures à 80°C.
